# EUROPÄISCHE PATENTANMELDUNG

(11) **EP 4 832 288 A1**
(43) Veröffentlichungstag der Anmeldung: **28.10.2026**
(21) Anmeldenummer: 26166408.0
(22) Anmeldetag: 20.03.2026
(51) Int. Cl.: H02H 9/06, H02H 9/04

(54) **ÜBERSPANNUNGSSCHUTZSYSTEM UND VERFAHREN ZUM BETREIBEN EINES ÜBERSPANNUNGSSCHUTZSYSTEMS**

(30) Priorität: 24.04.2025 DE 102025115888
(71) Anmelder: DEHN SE, 92318 Neumarkt i.d. OPf. (DE)
(72) Erfinder: BÖHM, Thomas, 92318 Neumarkt i.d.OPf. (DE); STRANGFELD, Uwe, 92318 Neumarkt i.d.OPf. (DE); Better, LI, 92318 Neumarkt i.d.OPf. (DE); XU, Jack, 92318 Neumarkt i.d.OPf. (DE); LUO, Kaster, 92318 Neumarkt i.d.OPf. (DE); REN, Lino, 92318 Neumarkt i.d.OPf. (DE); ZHANG, Jon, 92318 Neumarkt i.d.OPf. (DE)
(74) Vertreter: Prinz & Partner mbB

(57) **Zusammenfassung**

Die Erfindung betrifft ein Überspannungsschutzsystem (10) mit einem Überspannungsschutzmodul (18), das eine Überspannungsschutzfunktionalität aufweist, und einem Abtrennmodul (22), das mit dem Überspannungsschutzmodul (18) in Reihe geschaltet ist. Das Abtrennmodul (22) ist impulsstromtragfähig und zumindest netzfolgestrombegrenzend. Zudem hat das Abtrennmodul (22) eine Spannungsfestigkeit. Das Überspannungsschutzsystem (10) weist eine Auslöseschaltung (26) auf, die derart parallel zum Abtrennmodul (22) angeordnet ist, dass im Defektfall des Überspannungsschutzmoduls (18) ein Strompfad über die Auslöseschaltung (26) und das Überspannungsschutzmodul (18) vorliegt. Die Auslöseschaltung (26) umfasst ein Auslöseelement (30) und eine Strombegrenzungseinheit (32), die einen im Defektfall des Überspannungsschutzmoduls (18) durch das Auslöseelement (30) fließenden Strom begrenzt. Das Auslöseelement (30) ist eingerichtet, im Defektfall des Überspannungsschutzmoduls (18) auszulösen und eine Ausgabe (34) anzusteuern, die den Defektfall des Überspannungsschutzmoduls (18) signalisiert. Ferner ist ein Verfahren zum Betreiben eines Überspannungsschutzsystems (10) beschrieben.

## Beschreibung

Die Erfindung betrifft ein Überspannungsschutzsystem. Ferner betrifft die Erfindung ein Verfahren zum Betreiben eines Überspannungsschutzsystems.

In Überspannungsschutzsystemen kommen typischerweise Überspannungsschutzmodule für den Überspannungsschutz zum Einsatz, die aus dem Stand der Technik bekannt sind und in vielseitigen Gebieten eingesetzt werden. Ein Hauptanwendungsgebiet für den Überspannungsschutz, bei dem derartige Überspannungsschutzmodule verwendet werden, ist an Einspeisepunkten elektrischer Energie in Gebäuden oder bei verzweigten Energieverteilungen.

Die Überspannungsschutzmodule werden beispielsweise in separat ausgebildeten Überspannungsschutzgeräten eingesetzt, die auch als "surge protection device" (SPD) bezeichnet werden. Die Überspannungsschutzmodule funktionieren grundsätzlich derart, dass sie im Falle einer transienten oder temporären Überspannung niederohmig werden, um die Energie eines Überspannungsimpulses abzuleiten. Überlast und Betriebszustände außerhalb der spezifizierten Nenndaten der Überspannungsschutzmodule können ein Versagen der Überspannungsschutzmodule zur Folge haben.

In der Regel führt das Versagen eines Überspannungsschutzmoduls zu einem permanenten niederohmigen Verhalten, sodass vorgeschaltete Schutzorgane ("Over Current Protection" - OCP) wie Sicherungen oder Leitungsschutzschalter ("Miniatur Circuit Breaker" - MCB) auslösen. Zur Vermeidung des kompletten Spannungsausfalls durch Überstromabschaltung in der Energieverteilung werden bei Bedarf zusätzliche (Vor-)Sicherungen hinter der Verzweigung zum Überspannungsschutzmodul angeordnet.

Die Dimensionierung dieser (Vor-)Sicherungen ist jedoch kompliziert, da zwei Kriterien erfüllt sein müssen, die die richtige Dimensionierung erschweren. Einerseits dürfen die (Vor-)Sicherungen nicht zu klein dimensioniert werden, damit Stoßströme bzw. Blitzstoßströme, auch Stromimpulse genannt, nicht zur Auslösung führen, und andererseits dürfen die jeweiligen (Vor-)Sicherungen nicht zu groß dimensioniert werden, um die Zerstörung eines defekten Überspannungsschutzmoduls durch hohe thermische Belastung zu vermeiden. Grundsätzlich sind derartige (Vor-)Sicherungen vorgesehen, um bei Strömen im Kiloampere-Bereich auszulösen.

Darüber hinaus ist es aus dem Stand der Technik bekannt, dass das Überspannungsschutzgerät eine integrierte Sicherung aufweist, die auslöst, wenn ein Kurzschluss auftritt, um das Überspannungsschutzgerät vom Netz zu trennen.

Die Aufgabe der Erfindung ist es, in einfacher Weise einen solchen Defekt des Überspannungsschutzmoduls zu detektieren und dieses im Fehlerfall sicher abzutrennen.

Die Aufgabe wird erfindungsgemäß gelöst durch ein Überspannungsschutzsystem mit einem Überspannungsschutzmodul, das eine Überspannungsschutzfunktionalität aufweist, und einem Abtrennmodul, das mit dem Überspannungsschutzmodul in Reihe geschaltet ist. Das Abtrennmodul ist impulsstromtragfähig und zumindest netzfolgestrombegrenzend. Zudem hat das Abtrennmodul eine Spannungsfestigkeit. Das Überspannungsschutzsystem weist eine Auslöseschaltung auf, die derart parallel zum Abtrennmodul angeordnet ist, dass im Defektfall des Überspannungsschutzmoduls ein Strompfad über die Auslöseschaltung und das Überspannungsschutzmodul vorliegt. Die Auslöseschaltung umfasst ein Auslöseelement und eine Strombegrenzungseinheit, die einen im Defektfall des Überspannungsschutzmoduls durch das Auslöseelement fließenden Strom begrenzt. Das Auslöseelement ist eingerichtet, im Defektfall des Überspannungsschutzmoduls auszulösen und eine Ausgabe, insbesondere eine Anzeige, anzusteuern, die den Defektfall des Überspannungsschutzmoduls signalisiert bzw. anzeigt.

Ferner wird die Aufgabe erfindungsgemäß gelöst durch ein Verfahren zum Betreiben eines Überspannungsschutzsystems umfassend ein Überspannungsschutzmodul, das eine Überspannungsschutzfunktionalität aufweist, ein Abtrennmodul, das impulsstromtragfähig und zumindest netzfolgestrombegrenzend ist sowie eine Spannungsfestigkeit hat. Das Abtrennmodul ist mit dem Überspannungsschutzmodul in Reihe geschaltet. Bei intaktem Überspannungsschutzmodul wird ein Stoßstrom bzw. Blitzstoßstrom über das Abtrennmodul und das Überspannungsschutzmodul abgeleitet. Das Überspannungsschutzsystem umfasst eine Auslöseschaltung, die derart parallel zum Abtrennmodul angeordnet ist, dass im Defektfall des Überspannungsschutzmoduls ein Strompfad über die Auslöseschaltung und das Überspannungsschutzmodul vorliegt, sodass bei einem defekten Überspannungsschutzmodul über den Strompfad ein Stromfluss erfolgt, der ein Auslöseelement der Auslöseschaltung auslöst, wodurch eine Ausgabe, insbesondere eine Anzeige, angesteuert wird, die den Defektfall des Überspannungsschutzmoduls signalisiert bzw. anzeigt.

Der Grundgedanke der Erfindung ist es, das Abtrennmodul mit dem Überspannungsmodul in Reihe zu schalten, insbesondere vorzuschalten, und gleichzeitig die Auslöseschaltung parallel zu dem Abtrennmodul derart anzuordnen, dass ein Strompfad über die Auslöseschaltung und das Überspannungsschutzmodul vorliegt, wenn das Überspannungsschutzmodul defekt ist. Sollte das Überspannungsschutzmodul also defekt und damit dauerhaft niederohmig sein, so fließt ein Strom über den Strompfad, in dem die Auslöseschaltung angeordnet ist. Dies liegt letztendlich daran, dass die Auslöseschaltung am Netz anliegt, wenn das Überspannungsschutzmodul niederohmig geworden ist. Das Auslöseelement der Auslöseschaltung wird dann von dem Strom entsprechend durchflossen und ist so dimensioniert, dass es auslöst, insbesondere nach einer bestimmten Stromflussdauer, bspw. nach wenigen Millisekunden. Das Auslösen des Auslöseelements hat zur Folge, dass eine Ausgabe, insbesondere eine Anzeige, angesteuert wird, die den Defektfall des Überspannungsschutzmoduls signalisiert bzw. anzeigt.

Insofern wird ein Nutzer darüber informiert, dass das Überspannungsschutzmodul defekt ist. Die Spannungsfestigkeit des Überspannungsschutzsystems ist weiterhin gewährleistet, da das mit dem Überspannungsschutzmodul in Reihe geschaltete Abtrennmodul eine Spannungsfestigkeit aufweist.

Zudem kann das Abtrennmodul das defekte Überspannungsschutzmodul vom Netz trennen, sodass das defekte Überspannungsschutzmodul vor einer irreparablen Beschädigung geschützt ist.

Insbesondere weist das Abtrennmodul eine Funkenstrecke auf, beispielsweise eine Hörnerfunkenstrecke. Hierdurch ist gewährleistet, dass das Abtrennmodul eine inhärente Spannungsfestigkeit aufweist.

Darüber hinaus kann das Abtrennmodul eine längere Lebensdauer als das Überspannungsschutzmodul aufweisen. Dadurch ist sichergestellt, dass das Abtrennmodul bei einem Defekt des Überspannungsschutzmoduls noch intakt ist und die Überspannungsschutzfunktionalität übernehmen kann.

Insbesondere wird ein Netzfolgestrom vom Überspannungsschutzmodul und/oder vom Abtrennmodul zumindest begrenzt. Zudem können bzw. kann das Überspannungsschutzmodul und/oder das Abtrennmodul eingerichtet sein, einen Netzfolgestrom zu löschen.

Der Defektfall des Überspannungsschutzmoduls umfasst eine alterungsbedingte Verschlechterung des Überspannungsschutzmoduls sowie eine Verschlechterung aufgrund einer Überlastung. Insofern entspricht der Defektfall des Überspannungsschutzmoduls einer Degradation des Überspannungsschutzmoduls, insbesondere eine Degradation, die einen Kurzschluss des Überspannungsschutzmoduls zur Folge hat. Der Defektfall des Überspannungsschutzmoduls hat also zur Folge, dass ein Kurzschlussstrom fließt, da das Überspannungsschutzmodul aufgrund des Defekts niedrohmig geworden ist.

Aufgrund des Defektfalls des Überspannungsschutzmoduls liegen sowohl das Abtrennmodul als auch die Auslöseschaltung (dauerhaft) am Netz, wodurch der Stromfluss über die Auslöseschaltung erfolgt, der dazu führt, dass das Auslöseelement der Auslöseschaltung auslöst und die Ausgabe, insbesondere die Anzeige, entsprechend ansteuert.

Das Abtrennmodul weist eine Kurzschlussstromlöschfähigkeit auf, d.h. ein etwaiger Kurzschlussstrom kann durch das Abtrennmodul gelöscht werden. Folglich ist das Überspannungsschutzsystem auch im Defektfall des Überspannungsschutzmoduls weiterhin kurzschlussstromlöschfähig.

Das Abtrennmodul weist insbesondere eine (intrinsische) Spannungsfestigkeit auf, die beispielsweise bei 6 kV liegt. Mit anderen Worten ist das Abtrennmodul derart ausgebildet, dass ein mit einer Stoßspannung oberhalb von z.B. 6 kV, insbesondere ein mit einer Blitzstoßspannung, verknüpfter Strom abgeleitet werden kann, auch wenn das Überspannungsschutzmodul defekt ist. Mit anderen Worten erfolgt bei einer anliegenden Spannung von wenigstens z.B. 6 kV ein Stromfluss über das Abtrennmodul. Der Stromfluss kann vom Abtrennmodul begrenzt werden, insbesondere auch gelöscht werden.

Grundsätzlich kann die Ausgabe eine optische Ausgabe sein, also eine Anzeige. Alternativ oder ergänzend kann die Ausgabe aber auch akustisch, elektrisch oder elektromagnetisch erfolgen.

Ein Aspekt sieht vor, dass das Auslöseelement eingerichtet ist, die Ausgabe, insbesondere die Anzeige, mechanisch anzusteuern, insbesondere mittels eines mechanischen Impulses. Bei der Anzeige kann es sich um eine Rot-Grün-Anzeige handeln, die mechanisch verstellbar ist, um beispielsweise von einem Ausgangszustand, in dem die Anzeige "grün" anzeigt, auf einen Auslösezustand überzugehen, in dem die Anzeige "rot" anzeigt. Die Rot-Grün-Anzeige kann ein Anzeigeelement mit zwei Bereichen aufweisen, die eine rote Signalfarbe und eine grüne Signalfarbe haben. Je nach Zustand des Überspannungsschutzsystems, insbesondere des Überspannungsschutzmoduls, ist einer der beiden Bereiche sichtbar, also entweder der Bereich mit der grünen Signalfarbe oder der Bereich mit der roten Signalfarbe. Das Anzeigeelement kann also zwischen zwei verschiedenen Stellungen vom Auslöseelement verstellt werden, wobei in beiden Stellungen nur einer der beiden Bereiche sichtbar ist. Beispielsweise ist ein Sichtfenster dem Anzeigeelement zugeordnet, sodass im Ausgangzustand der Bereich mit der grünen Signalfarbe durch das Sichtfenster sichtbar ist, wohingegen im Defektfall des Überspannungsschutzmoduls der Bereich mit der roten Signalfarbe durch das Sichtfenster sichtbar ist.

Beim Auslösen des Auslöseelements kann demnach ein mechanischer Impuls entstehen, der genutzt wird, um die mechanische Anzeige mechanisch zu verstellen, sodass der Defektfall des Überspannungsschutzmoduls angezeigt wird.

Alternativ kann der mechanische Impuls genutzt werden, um eine elektrische Anzeige anzusteuern, den Defektfall des Überspannungsschutzmoduls anzuzeigen.

Grundsätzlich kann die Anzeige aber auch elektrisch angesteuert werden, wenn das Auslöseelement auslöst. Dies ist insbesondere dann der Fall, wenn die Anzeige ein Display oder ähnliches ist.

Die Ausgabe, die als akustische, elektrische und/oder elektromagnetische Ausgabe ausgebildet sein kann, kann ebenfalls elektrisch angesteuert werden, um den Defektfall des Überspannungsschutzmoduls akustisch, elektrisch und/oder elektromagnetisch zu signalisieren.

Ein weiterer Aspekt sieht vor, dass das Auslöseelement zudem eingerichtet ist, eine Funktionskomponente zu betätigen, insbesondere eine Abtrennvorrichtung und/oder eine Fernmeldeeinheit. Der mechanische Impuls, der beim Auslösen des Auslöseelements entsteht, kann (zusätzlich) dazu genutzt werden, eine nachgeschaltete Funktionskomponente zu betätigen, bspw. eine Abtrennvorrichtung auszulösen, sodass eine sichere Abtrennung des Überspannungsschutzmoduls erfolgt, wenn das Auslöseelement ausgelöst hat. Auch kann eine Fernmeldeeinheit aktiviert werden, indem beispielsweise ein Fernmeldekontakt getrennt wird, wenn das Auslöseelement auslöst, insbesondere aufgrund des mechanischen Impulses.

Insbesondere sind die Auslöseschaltung und das zur Auslöseschaltung parallel angeordnete Abtrennmodul derart dimensioniert, dass das Abtrennmodul und das Überspannungsschutzmodul einen Stoßstrom, insbesondere einen Blitzstoßstrom, bei einem Ableitvorgang ableiten und/oder nur ein vernachlässigbarer Anteil des Stoßstroms bzw. Blitzstoßstroms über das Auslöseelement fließt, also bei einem (regulären) Ableitvorgang des Stoßstroms bzw. Blitzstoßstroms mittels des Überspannungsschutzmoduls nicht auslöst. Das Überspannungsschutzmodul, sofern dies intakt ist, ist in der Lage, den Stoßstrom bzw. Blitzstoßstrom abzuleiten und einen Netzfolgestrom zumindest zu begrenzen bzw. zu löschen. Die Auslöseschaltung ist so dimensioniert, dass dessen Auslöseelement beim regulären Betrieb des Überspannungsschutzmoduls nicht auslöst, da der Stoßstrom, insbesondere der Blitzstoßstrom, über das Abtrennmodul und das Überspannungsschutzmodul abgeleitet wird. Dies liegt daran, dass der Stoßstrom bzw. Blitzstoßstrom bei einem Ableitvorgang im regulären Betrieb nur kurzzeitig ist.

Die Auslöseschaltung ist hinsichtlich ihrer Charakteristik/Kennlinie derart dimensioniert, dass beim Ableiten des Stoßstromes bzw. Blitzstoßstromes das Auslöseelement nicht belastet ist, sodass das Auslöseelement nicht auslöst.

Sollte das Überspannungsschutzmodul dagegen defekt sein, so wird das Überspannungsschutzmodul dauerhaft niederohmig. In dem Fall übernimmt das Abtrennmodul die Absicherung des Überspannungsschutzmoduls, insbesondere ein Begrenzen bzw. Löschen des Netzfolgestroms. Da die Auslöseschaltung parallel zum Abtrennmodul angeordnet ist, liegen die Auslöseschaltung und das Abtrennmodul im Defektfall des Überspannungsschutzmoduls am Netz an, sodass ein Strom durch das Auslöseelement fließt, der aufgrund des Widerstands der Auslöseschaltung begrenzt ist. Der im Defektfall des Überspannungsschutzmoduls durch das Auslöseelement fließende Strom hat zur Folge, dass das Auslöseelement auslöst, wodurch die Ausgabe, insbesondere die Anzeige, angesteuert wird, um den Defektfall des Überspannungsschutzmoduls zu signalisieren bzw. anzuzeigen.

Die Strombegrenzungseinheit kann den durch das Auslöseelement fließenden Strom auf unter 50 A begrenzen, insbesondere unter 10 A. Alternativ oder ergänzend kann das Auslöseelement eine Auslösekennlinie aufweisen, die gewährleistet, dass das Auslöseelement bei einem Strom von unter 50 A auslöst, insbesondere bei einem Strom von unter 10 A. Diese Größen gewährleisten eine zuverlässige Defekterkennung.

Die Strombegrenzungseinheit stellt sicher, dass nur ein geringer Strom durch das Auslöseelement fließt, insbesondere im Vergleich zu aus dem Stand der Technik bekannten Vorsicherungen, die den Stoßstrom bzw. Blitzstoßstrom führen müssen, ohne auszulösen. Eine im Stand der Technik verwendete 250 A Vorsicherung würde in einem nur 100 A starken Netz nie auslösen, wenn das Überspannungsschutzmodul defekt sein sollte. Dagegen ist erfindungsgemäß vorgesehen, dass das Auslöseelement auch direkt auslösen kann, wenn das Überspannungsschutzmodul defekt sein sollte, also auch ohne Überspannungsereignis.

Insofern stellt das erfindungsgemäße Überspannungsschutzsystem sicher, dass eine Ausgabe, insbesondere eine Anzeige, bzgl. des defekten Überspannungsschutzmoduls erfolgt, auch wenn kein Überspannungsereignis vorliegt. Anders ausgedrückt wird der Defekt des Überspannungsschutzmoduls unmittelbar angezeigt, da im Defektfall des Überspannungsschutzmoduls die Auslöseschaltung am Netz anliegt und so ausgelegt ist, dass das Auslöseelement auslöst.

Daher können mit dem erfindungsgemäßen Überspannungsschutzsystem auch hochohmige(re) Defektzustände des Überspannungsschutzmoduls erkannt werden.

Da das Auslöseelement nur mit einer geringen Stromstärke belastet wird, insbesondere im Vergleich zu den Vorsicherungen des Stands der Technik, erhöht sich die Betriebssicherheit, da große Fehlerströme vermieden werden, die eine unzulässige Erwärmung und damit Schädigung der Komponenten des Überspannungsschutzsystems mit sich bringen.

Ein weiterer Aspekt sieht vor, dass das Auslöseelement eine (thermische) Sicherung ist, insbesondere ein Schmelzleiter. Bei einer dauerhaften Strombelastung löst die Sicherung aus. Beispielsweise. schmilzt der Schmelzleiter, wodurch einerseits der Strompfad über die Auslöseschaltung unterbrochen ist und andererseits die Ausgabe, insbesondere die Anzeige, des Defektfalls des Überspannungsschutzmoduls angesteuert wird.

Alternativ oder ergänzend umfasst das Überspannungsschutzmodul einen Varistor und/oder eine Funkenstrecke. Das Überspannungsschutzmodul weist also ein Überspannungsschutzelement auf, welches je nach Einsatz- bzw. Anwendungsgebiet unterschiedlich ausgebildet sein kann. Beispielsweise handelt es sich um ein (Metalloxid-)Varistor (MOV) für den Typ 2 und 3 des Überspannungsschutzes, wohingegen für den Typ 1 des Überspannungsschutzes typischerweise ein Gasableiter oder eine Funkenstrecke als Überspannungsschutzelement zum Einsatz kommt.

Ferner kann die Strombegrenzungseinheit ein Widerstand, eine Induktivität, ein Halbleiter, insbesondere ein selbstleitender Transistor, ein spannungsschaltendes Element und/oder ein spannungsschaltendes Element umfassen.

Das Abtrennmodul kann eine Funkenstrecke umfassen. Hierdurch sind die Eigenschaften des Abtrennmoduls gewährleistet. Die Funkenstrecke stellt sicher, dass das Abtrennmodul impulsstromtragfähig, netzfolgestrombegrenzend und sogar netzfolgestromlöschend ist. Gleichzeitig gewährleistet die Funkenstrecke die Spannungsfestigkeit des Abtrennmoduls her.

Das Überspannungsschutzsystem kann ein Spannungssteuerelement umfassen, das parallel zum Überspannungsschutzmodul geschaltet ist, wobei das Spannungssteuerelement eingerichtet ist, den Schutzpegel des Überspannungsschutzsystems zu verändern, insbesondere zu verringern. Das Spannungssteuerelement kann ein Kondensator sein. Grundsätzlich lässt sich ein niedriger Schutzpegel des Überspannungsschutzsystems aufgrund des Spannungssteuerelements erreichen, der sich durch die Addition der Ansprechwerte der Reihenschaltung des Überspannungsschutzmoduls und des Abtrennmoduls einstellt.

Darüber hinaus kann das Auslöseelement eingerichtet sein, die Spannungsfestigkeit des Abtrennmoduls zu ändern, beispielsweise zu erhöhen, wenn das Auslöseelement auslöst. Das Abtrennmodul kann im Ausgangszustand eine Spannungsfestigkeit aufweisen, die jedoch verändert wird, bspw. nochmal erhöht wird, insbesondere wenn das Überspannungsschutzmodul defekt ist, also das Auslöseelement ausgelöst hat. Eine vorliegende Überspannung wird dann erst beim Erreichen eines anderen, insbesondere eines höheren, Spannungswerts abgeleitet, beispielsweise ab einer Spannung von 6 kV, wohingegen die Spannungsfestigkeit im Ausgangszustand beispielsweise 3 kV beträgt.

Bei einer Netzspannung von 255 V muss dagegen eine Spannungsfestigkeit größer 2,5 kV im abgetrennten Zustand hergestellt werden. Für eine Netzspannung von 255 V werden das Überspannungsschutzmodul und das Abtrennmodul beispielsweise derart ausgelegt, dass sie gemeinsam einen Schutzpegel von 1,5 kV garantieren, also einen maximalen Spannungswert von 1,5 kV. Das heißt wiederum, dass die Spannungsfestigkeit im Ausgangszustand unter 1,5 kV liegen kann.

Sind höhere Netzspannungen oder andere Bedingungen vorgesehen, so liegen die Werte für die Spannungsfestigkeit ebenfalls höher.

Es kann vorgesehen sein, dass das Auslöseelement eingerichtet ist, eine Triggerleitung des Abtrennmoduls abzutrennen. Hierdurch kann sich eine entsprechend höhere Spannungsfestigkeit des Abtrennmoduls gegenüber der Spannungsfestigkeit des Abtrennmoduls im Ausgangszustand ergeben, also wenn die Triggerung vorliegt, da die Triggerleitung nicht abgetrennt bzw. unterbrochen ist.

Das Abtrennen der Triggerleitung des Abtrennmoduls hat zur Folge, dass das Abtrennmodul erst später auslöst, also bei einer höheren Spannung. Hierzu kann die Auslöseschaltung mit dem Abtrennmodul gekoppelt sein. Beispielsweise ist die Triggerleitung durch einen Querabgriff der Auslöseschaltung ausgebildet, der zwischen dem Auslöseelement und der Strombegrenzungseinheit vorgesehen ist, insbesondere stromabwärts der Strombegrenzungseinheit. Beim Auslösen des Auslöseelements ist die Triggerleitung dann vom Netz abgetrennt, sodass das Abtrennmodul in den stoßspannungsfesten Zustand übergeht. Das Abtrennmodul, insbesondere die Funkenstrecke des Abtrennmoduls, hat dann eine höhere Spannungsfestigkeit.

Es kann aber auch vorgesehen sein, dass die Triggerleitung des Abtrennmoduls mechanisch unterbrochen wird, wenn das Auslöseelement auslöst. Mit anderen Worten wird ein Schaltmechanismus in Gang gesetzt, wenn das Auslöseelement auslöst, der bewirkt, dass die Triggerung des Abtrennmoduls, insbesondere der Funkenstrecke des Abtrennmoduls, nicht mehr funktionsfähig ist. Auch hierdurch ergibt sich die höhere Spannungsfestigkeit des Abtrennmoduls.

Es ergibt sich also eine Änderung eines Übergangszustands, wenn das Auslöseelement auslöst. Dies liegt daran, dass die Triggerleitung freigeschalten wird, bspw. vom Netz abgetrennt bzw. unterbrochen wird.

Grundsätzlich kann das Überspannungsschutzsystem eingerichtet sein, von einem ersten Spannungsniveau zu einem zweiten Spannungsniveau umzuschalten, wenn das Auslöseelement auslöst. Das Umschalten vom ersten Spannungsniveau auf das zweite Spannungsniveau kann dadurch erfolgen, dass die Triggerleitung freigeschalten wird, wenn das Auslöseelement auslöst.

Das Freischalten der Triggerleitung kann zur Folge haben, dass das Abtrennmodul erst später auslöst, also bei einer höheren Spannung.

Beispielsweise ist das zweite Spannungsniveau, das nach dem Auslösen des Auslöseelements vorliegt, höher als das erste Spannungsniveau. Somit würde sich eine Erhöhung der Spannungsfestigkeit ergeben, wenn vom ersten Spannungsniveau auf das zweite Spannungsniveau umgeschalten wird. Dies kann, wie vorstehend beschrieben, dadurch erfolgen, dass die Triggerleitung freigeschalten wird, wodurch das Abtrennmodul erst später auslöst, also bei einer höheren Spannung.

Das Überspannungsschutzmodul und das Abtrennmodul können in einem gemeinsamen Gehäuse untergebracht sein und ein Überspannungsschutzgerät ausbilden. Insofern handelt es sich bei dem Überspannungsschutzsystem um ein einzelnes Gerät.

Alternativ sind das Überspannungsschutzmodul und das Abtrennmodul separat zueinander ausgebildet, also als separate Geräte mit eigenem Gehäuse, bspw. einem Überspannungsschutzgerät und einem Überwachungsgerät. Die Auslöseschaltung kann in einem der beiden Geräte integriert sein oder ebenfalls als separates und eigenständiges Gerät vorliegen.

Das Abtrennmodul kann mit der Auslöseschaltung und der Ausgabe in einem Gerät ausgebildet sein, das als ein Backup-Schutzgerät bezeichnet werden kann, insbesondere als "SPD Specific Disconnector" (SSD) für das Überspannungsschutzgerät ("Surge Protection Device" - SPD).

Insgesamt ergibt sich somit bei dem Überspannungsschutzsystem ein zweikanaliger Aufbau, da ein erster Kanal und ein zweiter Kanal vorgesehen sind.

Der erste Kanal ist für den Ableitpfad von Stoßströmen ausgelegt und weist das Abtrennmodul auf, das in der Lage ist, den maximal zu erwartenden Kurzschlussstrom zu unterbrechen.

Der zweite Kanal übernimmt den Fehlerstrompfad bei Netzfrequenz und umfasst die Auslöseschaltung, insbesondere das Auslöseelement und die Strombegrenzungseinheit.

Das Auslöseelement kann eine niedrige I2t-Kennlinie haben.

Die Strombegrenzungseinheit kann zumindest ein Impedanzelement umfassen. Das Impedanzelement kann Komponenten wie Varistoren (MOVs), Thermistoren (PTC/NTC), Induktivitäten und/oder Transformatoren umfassen, die seriell oder parallel verschaltet sind.

Im zweiten Kanal kann zudem ein Impulstransformator vorgesehen sein, der insbesondere der Triggerleitung zugeordnet oder in der Triggerleitung vorhanden ist.

Über den ersten Kanal wird ein Strom bei einem Stoßstrom, z.B. Blitzeinschlag, abgeleitet, indem das Abtrennmodul in einen leitenden Zustand übergeht. Der erste Kanal, insbesondere das Abtrennmodul, kann nach Durchgang des Stoßstroms wieder in einen nicht leitenden Zustand zurückkehren, sobald das Überspannungsschutzmodul, insbesondere das Überspannungsschutzelement des Überspannungsschutzmoduls, in einen hochohmigen Zustand zurückkehrt.

Falls das Überspannungsschutzmodul, insbesondere das Überspannungsschutzelement, nach einem Stoßstrom oder bei anderen Fehlern nicht in den hochohmigen Zustand zurückkehrt, bleibt der erste Kanal, insbesondere das Abtrennmodul, leitend und übernimmt den Kurzschlussstrom. Das Abtrennmodul kann eine Funkenstrecke mit einer Lichtbogenlöschkammer aufweisen, um auch diese hohen Ströme sicher zu unterbrechen.

Der zweite Kanal dient als Sicherungsschutz. Unter anderem bei Fehlerströmen, die von dem Abtrennmodul nicht erfasst werden, z.B. niederohmiger Fehler ohne Stoßstrom, greift das im zweiten Kanal befindliche Auslöseelement ein und trennt den Schutzpfad, in dem das Auslöseelement angeordnet ist, sicher ab. Hierbei kann sich eine Änderung der Spannungsfestigkeit des Abtrennmoduls ergeben.

Darüber hinaus kann ein Sensorelement vorgesehen sein, das insbesondere im ersten Kanal angeordnet und eingerichtet ist, einen Kurzschlussstrom zu detektieren. Das Sensorelement erkennt also das Auftreten eines Kurzschlussstroms des Stoßstromes im ersten Kanal, also im Ableitpfad. Bei Detektion eines solchen Ereignisses kann eine Signalisierung erfolgen und/oder Schutzmaßnahme ausgelöst werden.

Ferner kann ein Steuerschalter vorgesehen sein, der eingerichtet ist, je nach Betriebszustand eine Überwachung auf Kurzschlussströme bei Netzfrequenz zu ermöglichen oder gezielt auszusetzen. Der Steuerschalter ist im zweiten Kanal angeordnet, sodass in der geöffneten Stellung des Steuerschalters keine elektrische Verbindung über den zweiten Kanal möglich ist.

Grundsätzlich ist das Überspannungsschutzsystem geeignet, in einem Wechselspannungsnetz und in einem Gleichspannungsnetz eingesetzt zu werden.

Insbesondere ist die Strombegrenzungseinheit dem Auslöseelement in Stromflussrichtung der Auslöseschaltung vorgeschaltet. Mit anderen Worten ist das Auslöseelement zwischen der Strombegrenzungseinheit und dem Überspannungsschutzmodul angeordnet. Insbesondere mündet die Triggerleitung des Abtrennmoduls zwischen der Strombegrenzungseinheit und dem Auslöseelement. Beim Auslösen des Auslöseelements ist somit sichergestellt, dass kein Strompfad über das Abtrennmodul und die Triggerleitung zum Überspannungsschutzmodul möglich ist.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine schematische Darstellung eines erfindungsgemäßen Überspannungsschutzsystems,
- Figur 2 eine schematische Darstellung eines erfindungsgemäßen Überspannungsschutzsystems gemäß einer ersten Variation,
- Figur 3 eine schematische Darstellung eines erfindungsgemäßen Überspannungsschutzsystems gemäß einer zweiten Variation,
- Figur 4 eine schematische Darstellung eines erfindungsgemäßen Überspannungsschutzsystems gemäß einer dritten Variation,
- Figur 5 eine schematische Darstellung eines erfindungsgemäßen Überspannungsschutzsystems gemäß einer vierten Variation, und
- Figur 6 eine schematische Darstellung eines erfindungsgemäßen Überspannungsschutzsystems gemäß einer fünften Variation.

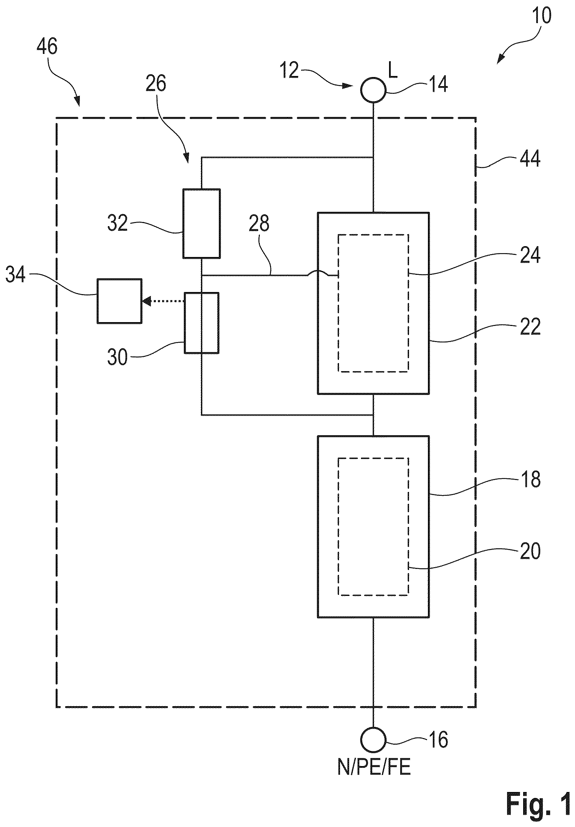

In Figur 1 ist ein Überspannungsschutzsystem 10 für den Überspannungsschutz bzw. Blitzschutz gezeigt, das in einem Netz 12 eingebunden ist, insbesondere zwischen einem ersten Anschluss 14, beispielsweise einer Phase L, und einem zweiten Anschluss 16, beispielsweise einem Neutralleiter N, Schutzerde PE oder Funktionserde FE.

Das Überspannungsschutzsystem 10 umfasst ein Überspannungsschutzmodul 18, das ein Überspannungsschutzelement 20 aufweist, welches grundsätzlich ein kurzschlussstromlöschfähiges, überspannungsbegrenzendes und/oder überspannungsschaltendes Bauteil ist. Hierdurch ist gewährleistet, dass das Überspannungsschutzmodul 18 eine Überspannungsschutzfunktionalität hat, um eine Überspannung ableiten und einen Netzfolgestrom zumindest begrenzen zu können, insbesondere auch löschen zu können. Das Überspannungsschutzelement 20 kann ein Varistor, eine Funkenstrecke oder eine Kombination aus Funkenstrecke und Varistor sein.

Das Überspannungsschutzmodul 18 ist mit einem Abtrennmodul 22 in Reihe geschaltet. Demnach sind das Überspannungsschutzmodul 18 sowie das Abtrennmodul 22 zwischen dem ersten Anschluss 14 und dem zweiten Anschluss 16 angeordnet.

Das Abtrennmodul 22 dient grundsätzlich dazu, das Überspannungsschutzmodul 18 sicher vom Netz 12 trennen zu können, sofern das Überspannungsschutzmodul 18 defekt sein sollte.

Darüber hinaus ist auch das Abtrennmodul 22 netzfolgestrombegrenzend, insbesondere netzfolgestromlöschend.

Generell kann das Abtrennmodul 22 kurzschlussstromlöschfähig sein.

Das Abtrennmodul 22 hat zudem eine Spannungsfestigkeit, das heißt, dass sich das Abtrennmodul 22 zunächst in einem nicht leitenden Zustand befindet und erst ab einer definierten Überspannung in den leitenden Zustand übergeht, bspw. bei einer Spannung von 6 kV.

Darüber hinaus ist das Abtrennmodul 22 auch impulsstromtragfähig, sodass dies - wie das Überspannungsschutzmodul 18 zum Ableiten eines Stoßstroms fähig ist, insbesondere eines Blitzstoßstroms. Um die Eigenschaften des Abtrennmoduls 22 zu gewährleisten, weist das Abtrennmodul 22 beispielsweise eine Funkenstrecke 24 auf, insbesondere eine Hörnerfunkenstrecke.

Das Überspannungsschutzsystem 10 umfasst zudem eine Auslöseschaltung 26, die derart parallel zum Abtrennmodul 22 angeordnet ist, dass ein Strompfad über die Auslöseschaltung 26 und das Überspannungsschutzmodul 18 zwischen den Anschlüssen 14, 16 vorliegt, wenn das Überspannungsschutzmodul 18 defekt sein sollte, wie nachfolgend noch erläutert wird.

In der gezeigten Ausführungsform ist die Auslöseschaltung 26 mit dem Abtrennmodul 22 über eine Triggerleitung 28 verbunden.

Die Auslöseschaltung 26 umfasst ein Auslöseelement 30 und eine Strombegrenzungseinheit 32, die in Reihe geschaltet sind, wobei die Triggerleitung 28 als Querabgriff zwischen dem Auslöseelement 30 und der Strombegrenzungseinheit 32 vorgesehen ist.

Die Strombegrenzungseinheit 32 begrenzt einen durch das Auslöseelement 30 fließenden Strom, wenn dieser über den Strompfad im Defektfall des Überspannungsschutzmoduls 18 fließt. Beispielsweise begrenzt die Strombegrenzungseinheit 32 den durch das Auslöseelement 30 fließenden Strom auf unter 50 A, insbesondere unter 10 A.

In der gezeigten Ausführungsform handelt es sich bei dem Auslöseelement 30 um einen Schmelzleiter, wohingegen die Strombegrenzungseinheit 32 durch einen (thermischen) Widerstand ausgebildet ist. Alternativ kann die Strombegrenzungseinheit 32 auch durch eine Induktivität, einen Halbleiter, insbesondere einen selbstleitenden Transistor, ein spannungsschaltendes Element und/oder ein spannungsschaltendes Element ausgebildet sein.

Grundsätzlich ist das Überspannungsschutzsystem 10 eingerichtet, dass ein Stoßstrom bzw. Blitzstoßstrom, auch Stromimpuls genannt, beispielsweise aufgrund einer transienten oder temporären Überspannung über das Abtrennmodul 22 und das Überspannungsschutzmodul 18 abgeleitet wird. Der Anteil des Stoßstroms bzw. Blitzstoßstroms, der über die parallel zum Abtrennmodul 22 vorgesehene Auslöseschaltung 26 fließt, ist dabei vernachlässigbar.

Konkret wird aufgrund der vorliegenden Überspannung sowohl das Abtrennmodul 22 als auch das Überspannungsschutzmodul 18 niederohmig, sodass der Strom vom ersten Anschluss 14 die Reihenschaltung aus Abtrennmodul 22 und Überspannungsschutzmodul 18 zum zweiten Anschluss 16 fließt.

Beispielsweise zündet die Funkenstrecke 24 des Abtrennmoduls 22, wodurch das Abtrennmodul 22 niederohmig wird. Das Überspannungsschutzelement 20, also der Varistor und/oder die Funkenstrecke, wird ebenfalls aufgrund der transienten oder temporären Überspannung niederohmig.

Die Auslöseschaltung 26 und das zur Auslöseschaltung 26 parallel angeordnete Abtrennmodul 22 sind demnach derart dimensioniert, dass das Auslöseelement 30 bei einem derartigen regulären Ableitvorgang des Stoßstroms bzw. Blitzstoßstroms nicht auslöst. Dies wird unter anderem dadurch erreicht, dass der Strom nur kurzzeitig fließt.

Sollte jedoch das Überspannungsschutzmodul 18 defekt sein, so wird das Überspannungsschutzmodul 18 dauerhaft niederohmig, was zur Folge hat, dass das Abtrennmodul 22 sowie die Auslöseschaltung 26 am Netz 12 anliegen, sodass unter anderem ein Strom über den Strompfad fließt, in dem die Auslöseschaltung 26 vorgesehen ist.

Der durch das Auslöseelement 30 fließende Strom hat zur Folge, dass das Auslöseelement 30 auslöst, beispielsweise der Schmelzleiter schmilzt. Dies kann bereits innerhalb weniger Millisekunden der Fall sein.

Das Auslöseelement 30 weist eine Auslösekennlinie auf, die gewährleistet, dass das Auslöseelement 30 bereits bei einem Strom von unter 50 A auslöst, insbesondere bei einem Strom von unter 10 A. Es muss also kein Überspannungsereignis vorliegen, damit das Auslöseelement 30 auslöst, sondern lediglich das Überspannungsschutzmodul 18 defekt sein. Hierdurch können frühzeitig Defekte des Überspannungsschutzmoduls 18 erkannt werden, also auch hochohmigere Defekte im Vergleich zu Lösungen aus dem Stand der Technik.

Wenn das Auslöseelement 30 ausgelöst hat, steuert dies wiederum eine Ausgabe 34, bspw. eine Anzeige, um den Defektfall des Überspannungsschutzmoduls 18 einem Nutzer zu signalisieren bzw. anzuzeigen.

In einer Ausgestaltung handelt es sich bei der Ausgabe 34 um eine optische Anzeige, insbesondere eine mechanische Rot-Grün-Anzeige, die von einem vom Auslöseelement 30 ausgehenden mechanischen Impuls entsprechend verstellt wird.

Zudem ändert das Auslöseelement 30 die Spannungsfestigkeit des Abtrennmoduls 22, insbesondere erhöht es die Spannungsfestigkeit des Abtrennmoduls 22.

Dies kann dadurch geschehen, dass die Triggerleitung 28 zum Abtrennmodul 22 abgetrennt wird, wenn das Auslöseelement 30 auslöst, bzw. unterbrochen wird. Hierdurch ergibt sich ein Freischalten der Triggerleitung 28.

Ein für die Triggerung benötigter Triggerstrom zur Aktivierung des Abtrennmoduls 22, insbesondere zur Zündung der Funkenstrecke 24, muss von dem Eingangspotential des Abtrennmoduls 22, das dem ersten Anschluss 14 zugeordnet ist, zum Querabgriff der Triggerleitung 28 und dann durch das Auslöseelement 30 zum Ausgang des Abtrennmoduls 22 fließen. Da das Auslöseelement 30 aber ausgelöst hat, ist dieser Weg versperrt und das Abtrennmodul 22 geht in einen stoßspannungsfesten Zustand über. Mit anderen Worten ist die Spannungsfestigkeit des Abtrennmoduls 22 erhöht.

Die Spannungsfestigkeit kann 3 kV betragen, wobei der Wert anpassbar ist, insbesondere ergibt sich der Wert durch den Einsatzort und entsprechenden Höhenkorrekturfaktoren für den Einsatzort.

Diese Spannungsfestigkeit gilt grundsätzlich für das gesamte Abtrennmodul 22, insbesondere die gesamte Funkenstrecke 24, d.h. die Hauptelektroden der Funkenstrecke 24 dürfen auch nicht bei diesem Wert zünden.

Aufgrund der Ausgestaltung des Abtrennmoduls 22, insbesondere der vorhandenen Funkenstrecke 24, weist das Abtrennmodul 22 aber dennoch eine Kurzschlussstromlöschfähigkeit auf. Beispielsweise wird das Abtrennmodul 22 bei einem 6 kV Impuls aktiv, also zündet die Funkenstrecke 24, sodass ein Stromfluss über das Abtrennmodul 22 erfolgt. Der Stromfluss kann dann aufgrund der Kurzschlussstromlöschfähigkeit des Abtrennmoduls 22 gelöscht werden.

Das Überspannungsschutzsystem 10 kann also von einem ersten Spannungsniveau zu einem zweiten Spannungsniveau umschalten, wenn das Auslöseelement 30 auslöst.

Im obigen Beispiel beträgt das erste Spannungsniveau 3 kV, wohingegen das zweite Spannungsniveau 6 kV beträgt, also höher ist als das erste Spannungsniveau. Wie vorstehend schon beschrieben, lassen sich die Werte aber anpassen, sodass sie lediglich beispielhaft sind.

Diese Ausgestaltung ist daher offensichtlich vorteilhaft gegenüber herkömmlichen Schmelzsicherungen, da die Auslösung auch bei kleinen Strömen bzw. Netzen erfolgt. Eine 250 A Schmelzsicherung vor dem Überspannungsschutzmodul 18 würde in einem nur 100 A starken Netz beispielsweise nie auslösen.

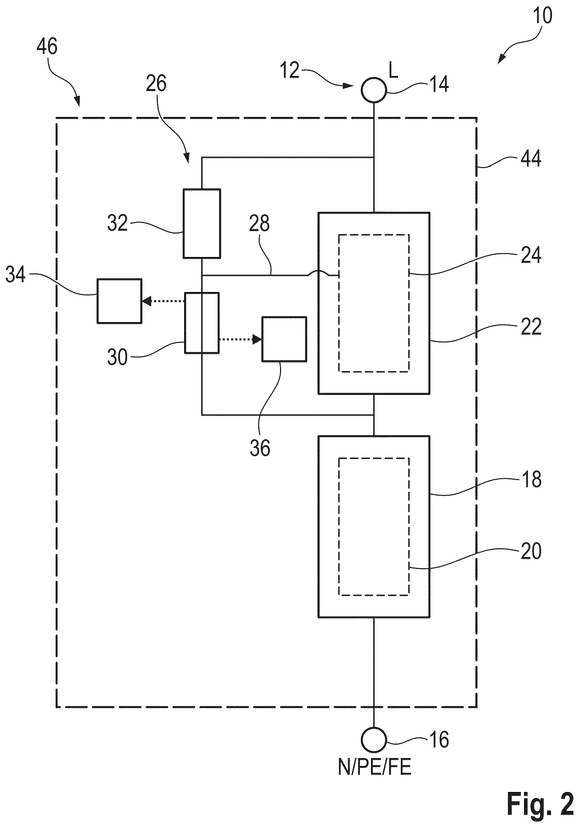

In der in Figur 2 gezeigten Ausführungsform wird der vom Auslöseelement 30 ausgehende mechanische Impuls zudem genutzt, um eine Funktionskomponente 36 zu betätigen, insbesondere eine Fernmeldeeinheit zu aktivieren, um den Defekt zu melden.

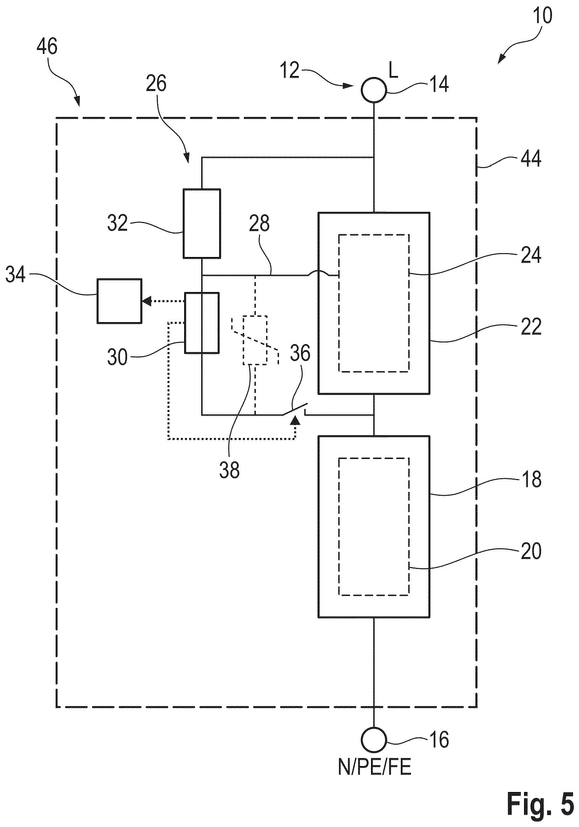

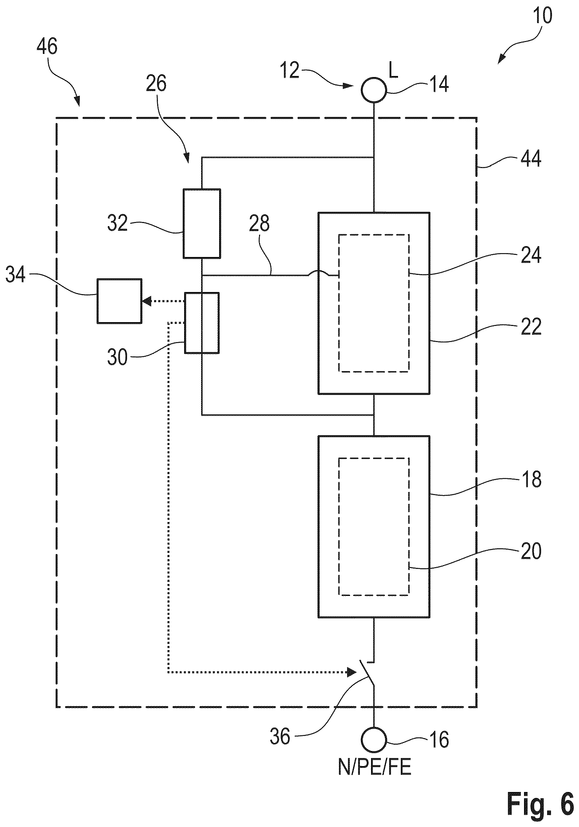

In den Figuren 5 und 6 ist zudem gezeigt, dass die Funktionskomponente 36 durch eine Abtrennvorrichtung ausgebildet sein kann, die zum Abtrennen des defekten Überspannungsschutzmoduls 18 genutzt wird, um dies zu schützen.

In Figur 6 ist die als Abtrennvorrichtung ausgebildete Funktionskomponente 36 hinter dem Überspannungsschutzmodul 18 angeordnet, also zwischen dem Überspannungsschutzmodul 18 und dem zweiten Anschluss 16, sodass das Überspannungsschutzmodul 18, das Abtrennmodul 22 sowie die Auslöseschaltung 26 vom Netz 12 getrennt werden.

In Figur 5 ist die als Abtrennvorrichtung ausgebildete Funktionskomponente 36 dagegen in der Auslöseschaltung 26 vorgesehen, nämlich in einem Querzweig, der zwischen dem Überspannungsschutzmodul 18 und dem Abtrennmodul 22 mündet. Hierdurch wird die Spannungsfestigkeit sichergestellt, da die als Abtrennvorrichtung ausgebildete Funktionskomponente 36 betätigt wird, damit die Auslöseschaltung 26 vom Netz 12 getrennt wird. Insofern kann diese Funktionskomponente 36 auch als Öffner bezeichnet werden.

Das Auslöseelement 30 stellt dabei einen hohen ohmschen Widerstand in der Triggerung dar. Der Spannungsabfall über das Auslöseelement 30 kann durch zumindest ein spannungsbegrenzendes Bauteil 38, z.B. einen Varistor, begrenzt werden. In diesem Fall wird die als Abtrennvorrichtung bzw. Öffner fungierende Funktionskomponente 36 unabdingbar, da das ausgelöste Auslöseelement 30 alleine keine Unterbrechung der Triggerung mehr ermöglicht.

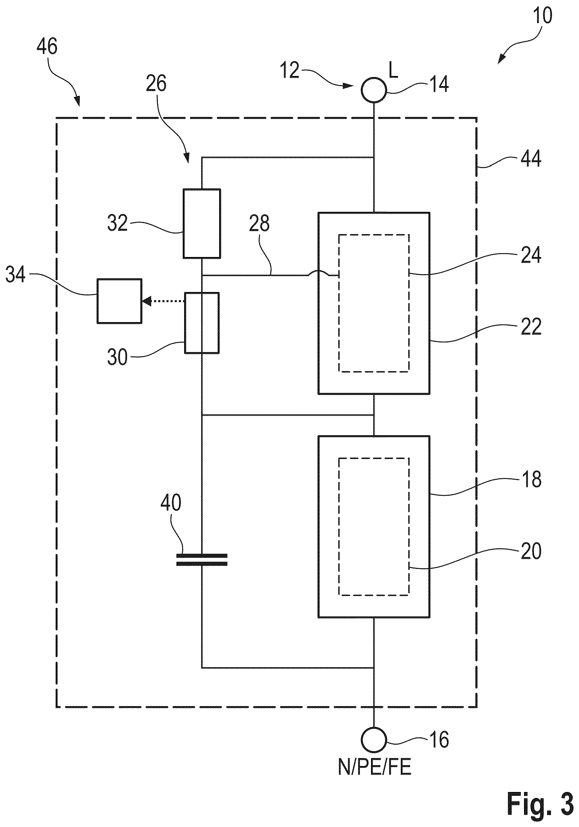

In der in Figur 3 gezeigten Ausführungsform umfasst das Überspannungsschutzsystem 10 ein optionales Spannungssteuerelement 40, das parallel zum Überspannungsschutzmodul 18 geschaltet ist. Das Spannungssteuerelement 40 dient dazu, den Schutzpegel des Überspannungsschutzsystems 10 zu verändern, insbesondere zu verringern, was sich durch die Addition der Ansprechwerte der Reihenschaltung des Überspannungsschutzmoduls 18 und des Abtrennmoduls 22 ergibt. Beispielsweise handelt es sich bei dem Spannungssteuerelement 40 um einen Kondensator.

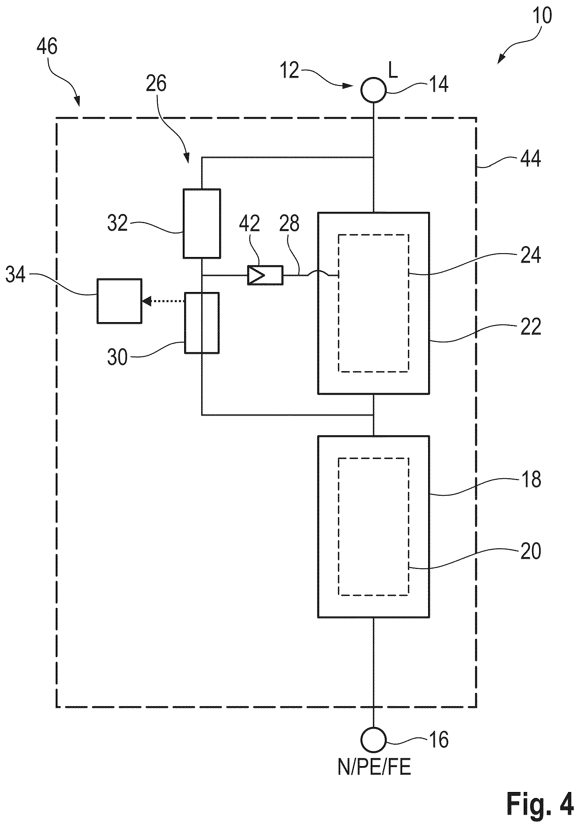

In Figur 4 ist eine weitere Ausführungsform gezeigt, bei der in der Triggerleitung 28 zumindest ein zusätzliches Bauteil 42 zur Einstellung der Spannungsfestigkeit vorgesehen ist. Hierbei kann es sich um einen Varistor, einen Gasableiter, eine Diode oder eine andere spannungsschaltende Komponente handeln. Insbesondere sind auch mehrere solcher Bauteile 42 vorgesehen, beispielsweise in einer Reihenschaltung in der Triggerleitung 28.

Grundsätzlich kann über das zumindest eine Bauteil 42 die Triggerung und die Spannungsfestigkeit eingestellt werden.

In den Figuren ist ferner gezeigt, dass die Komponenten des Überspannungsschutzsystems 10 in einem gemeinsamen Gehäuse 44 untergebracht sind, sodass das Überspannungsschutzsystem 10 durch ein einziges Überspannungsschutzgerät 46 ausgebildet sein kann.

Mit dem Überspannungsschutzsystem 10 ist also gewährleistet, dass bei intaktem Überspannungsschutzmodul 18 ein Stoßstrom bzw. Blitzstoßstrom über das Abtrennmodul 22 und das Überspannungsschutzmodul 18 abgeleitet wird, wohingegen bei defektem Überspannungsschutzmodul 18 ein Stromfluss über den Strompfad erfolgt, in dem die Auslöseschaltung 26 angeordnet ist, sodass der Strom das Auslöseelement 30 der Auslöseschaltung 26 auslöst, das die Ausgabe 34, insbesondere die Anzeige, ansteuert, die den Defektfall des Überspannungsschutzmoduls 18 signalisiert bzw. anzeigt.

Zusätzlich kann die Funktionskomponente 36 betätigt und/oder die Spannungsfestigkeit des Abtrennmoduls 22 erhöht werden, wenn das Auslöseelement 30 ausgelöst hat, insbesondere aufgrund des mechanischen Impulses, der durch das Auslösen des Auslöseelements 30 entsteht.

Darüber hinaus lassen sich die unterschiedlichen Ausführungsformen untereinander kombinieren, sodass das Überspannungsschutzsystem 10 beispielsweise auch gleichzeitig das Bauteil 42 zur Einstellung der Spannungsfestigkeit sowie die zusätzliche Funktionskomponente 36 aufweisen kann usw..

Grundsätzlich lässt sich das in den vorherigen Figuren gezeigte Überspannungsschutzsystem 10 demnach so betreiben, dass im Defektfall des Überspannungsschutzmoduls 18 ein Strompfad über die Auslöseschaltung 26 und das Überspannungsschutzmodul 18 vorliegt, sodass bei einem defekten Überspannungsschutzmodul 18 ein Stromfluss über den Strompfad erfolgt, der das Auslöseelement 30 der Auslöseschaltung 26 auslöst. Hierdurch wird zumindest die Ausgabe 34, insbesondere die Anzeige, angesteuert, die den Defektfall des Überspannungsschutzmoduls 18 signalisiert bzw. anzeigt.

## Patentansprüche

1. Überspannungsschutzsystem (10) mit einem Überspannungsschutzmodul (18), das eine Überspannungsschutzfunktionalität aufweist, und einem Abtrennmodul (22), das mit dem Überspannungsschutzmodul (18) in Reihe geschaltet ist, wobei das Abtrennmodul (22) impulsstromtragfähig und zumindest netzfolgestrombegrenzend ist sowie eine Spannungsfestigkeit hat, wobei das Überspannungsschutzsystem (10) eine Auslöseschaltung (26) aufweist, die derart parallel zum Abtrennmodul (22) angeordnet ist, dass im Defektfall des Überspannungsschutzmoduls (18) ein Strompfad über die Auslöseschaltung (26) und das Überspannungsschutzmodul (18) vorliegt, wobei die Auslöseschaltung (26) ein Auslöseelement (30) und eine Strombegrenzungseinheit (32) umfasst, die einen im Defektfall des Überspannungsschutzmoduls (18) durch das Auslöseelement (30) fließenden Strom begrenzt, und wobei das Auslöseelement (30) eingerichtet ist, im Defektfall des Überspannungsschutzmoduls (18) auszulösen und eine Ausgabe (34) anzusteuern, die den Defektfall des Überspannungsschutzmoduls (18) signalisiert.

2. Überspannungsschutzsystem (10) nach Anspruch 1, **dadurch gekennzeichnet, dass** das Auslöseelement (30) eingerichtet ist, die Ausgabe (34) mechanisch anzusteuern, insbesondere mittels eines mechanischen Impulses.

3. Überspannungsschutzsystem (10) nach Anspruch 1 oder 2, **dadurch gekennzeichnet, dass** das Auslöseelement (30) zudem eingerichtet ist, zumindest eine Funktionskomponente (36) zu betätigen, insbesondere eine Abtrennvorrichtung und/oder eine Fernmeldeeinheit.

4. Überspannungsschutzsystem (10) nach einem der vorhergehenden Ansprüche, **dadurch gekennzeichnet, dass** die Auslöseschaltung (26) und das zur Auslöseschaltung (26) parallel angeordnete Abtrennmodul (22) derart dimensioniert sind, dass das Abtrennmodul (22) und das Überspannungsschutzmodul (18) einen Stoßstrom bei einem Ableitvorgang ableiten.

5. Überspannungsschutzsystem (10) nach einem der vorhergehenden Ansprüche, **dadurch gekennzeichnet, dass** die Strombegrenzungseinheit (32) den durch das Auslöseelement (30) fließenden Strom auf unter 50 A begrenzt, insbesondere unter 10 A, und/oder dass das Auslöseelement (30) eine Auslösekennlinie aufweist, die gewährleistet, dass das Auslöseelement (30) bei einem Strom von unter 50 A auslöst, insbesondere bei einem Strom von unter 10 A.

6. Überspannungsschutzsystem (10) nach einem der vorhergehenden Ansprüche, **dadurch gekennzeichnet, dass** das Überspannungsschutzmodul (18) einen Varistor und/oder eine Funkenstrecke umfasst, dass das Abtrennmodul (22) eine Funkenstrecke umfasst, dass das Auslöseelement (30) eine Sicherung ist, und/oder dass die Strombegrenzungseinheit (32) ein Widerstand, eine Induktivität, ein Halbleiter, insbesondere ein selbstleitender Transistor, ein spannungsschaltendes Element und/oder ein spannungsschaltendes Element umfasst.

7. Überspannungsschutzsystem (10) nach einem der vorhergehenden Ansprüche, **dadurch gekennzeichnet, dass** das Überspannungsschutzsystem (10) ein Spannungssteuerelement (40) umfasst, das parallel zum Überspannungsschutzmodul (18) geschaltet ist, wobei das Spannungssteuerelement (40) eingerichtet ist, den Schutzpegel des Überspannungsschutzsystems (10) zu verändern, insbesondere zu verringern.

8. Überspannungsschutzsystem (10) nach einem der vorhergehenden Ansprüche, **dadurch gekennzeichnet, dass** das Auslöseelement (30) eingerichtet ist, die Spannungsfestigkeit des Abtrennmoduls (22) zu ändern, wenn das Auslöseelement (30) auslöst.

9. Überspannungsschutzsystem (10) nach Anspruch 8, **dadurch gekennzeichnet, dass** das Auslöseelement (30) eingerichtet ist, eine Triggerleitung (28) des Abtrennmoduls (22) abzutrennen.

10. Überspannungsschutzsystem (10) nach Anspruch 8 oder 9, **dadurch gekennzeichnet, dass** das Auslöseelement (30) eingerichtet ist, die Spannungsfestigkeit des Abtrennmoduls (22) zu erhöhen.

11. Überspannungsschutzsystem (10) nach einem der vorhergehenden Ansprüche, **dadurch gekennzeichnet, dass** das Überspannungsschutzsystem (10) eingerichtet ist, von einem ersten Spannungsniveau zu einem zweiten Spannungsniveau umzuschalten, wenn das Auslöseelement (30) auslöst.

12. Überspannungsschutzsystem (10) nach Anspruch 11, **dadurch gekennzeichnet, dass** das zweite Spannungsniveau, das nach dem Auslösen des Auslöseelements (30) vorliegt, höher als das erste Spannungsniveau ist.

13. Überspannungsschutzsystem (10) nach einem der vorhergehenden Ansprüche, **dadurch gekennzeichnet, dass** das Überspannungsschutzmodul (18) und das Abtrennmodul (22) in einem gemeinsamen Gehäuse (44) untergebracht sind und ein Überspannungsschutzgerät (46) ausbilden.

14. Überspannungsschutzsystem (10) nach einem der vorhergehenden Ansprüche, **dadurch gekennzeichnet, dass** die Strombegrenzungseinheit (32) dem Auslöseelement (30) in Stromflussrichtung der Auslöseschaltung (26) vorgeschaltet ist.

15. Verfahren zum Betreiben eines Überspannungsschutzsystems (10) umfassend ein Überspannungsschutzmodul (18), das eine Überspannungsschutzfunktionalität aufweist, ein Abtrennmodul (22), das impulsstromtragfähig und zumindest netzfolgestrombegrenzend ist sowie eine Spannungsfestigkeit hat, wobei das Abtrennmodul (22) mit dem Überspannungsschutzmodul (18) in Reihe geschaltet ist, wobei bei intaktem Überspannungsschutzmodul (18) ein Stoßstrom über das Abtrennmodul (22) und das Überspannungsschutzmodul (18) abgeleitet wird, und wobei das Überspannungsschutzsystem (10) eine Auslöseschaltung (26) umfasst, die derart parallel zum Abtrennmodul (22) angeordnet ist, dass im Defektfall des Überspannungsschutzmoduls (18) ein Strompfad über die Auslöseschaltung (26) und das Überspannungsschutzmodul (18) vorliegt, sodass bei einem defekten Überspannungsschutzmodul (18) über den Strompfad ein Stromfluss erfolgt, der ein Auslöseelement (30) der Auslöseschaltung (26) auslöst, wodurch eine Ausgabe (34) angesteuert wird, die den Defektfall des Überspannungsschutzmoduls (18) signalisiert.
